Europäisches Patentamt

European Patent Office

Office européen des brevets

(11) Publication number: **0 276 040 B1**

# EUROPEAN PATENT SPECIFICATION

(45) Date of publication of patent specification: **15.01.92**  (51) Int. Cl.⁵: **F16L 37/00**, F16L 41/08

(21) Application number: **88200084.7**

(22) Date of filing: **19.01.88**

(54) **Pipe connecting piece, in particular for drainage pipes.**

(30) Priority: **22.01.87 NL 8700154**

(43) Date of publication of application:
**27.07.88 Bulletin 88/30**

(45) Publication of the grant of the patent:
**15.01.92 Bulletin 92/03**

(84) Designated Contracting States:
**AT BE CH DE ES FR GB GR IT LI LU NL SE**

(56) References cited:
EP-A- 0 020 213
GB-A- 2 127 510
GB-A- 2 127 510
US-A- 1 365 884
US-A- 3 669 473

Handbook of Fastening and Joining of Metal
Parts, p. 471

(73) Proprietor: **WAVIN B.V.**
**Händellaan 251**
**NL-8031 EM Zwolle(NL)**

(72) Inventor: **Madsen, Frede**
**Vestervangsvej 24**
**DK-8450 Hammel(DK)**

(74) Representative: **van der Veken, Johannes Adriaan et al**
**EXTERPATENT B.V. P.O. Box 90649**
**NL-2509 LP 's-Gravenhage(NL)**

EP 0 276 040 B1

Rank Xerox (UK) Business Services

## Description

The invention relates to a plastic pipe coupling according to the preamble of the claim.

A pipe coupling of this type is known from GB-A-2 127 510.

The main part and the branch part of this known pipe coupling have such a shape that for the manufacture of these parts relatively expensive tools, such as injection moulding tools, are necessary. Therefore, the manufacturing cost for the known pipe coupling are relatively high.

The object of the present invention is to provide a substantially T-shaped pipe coupling, in particular for drainage pipes, which is simple and which can be manufactured easily and at low cost.

This object is attained by a pipe coupling according to the appended claim.

Such a pipe coupling consists of cheap parts which, for example, can be formed out of extruded pipe sections in a simple manner with simple tools, thus rendering a cheap pipe coupling which on the other hand meets all the requirements.

The invention will now be explained in more detail by means of the description below of an exemplary embodiment with reference to the accompanying drawing, in which:

Figure 1 is a side view, partly in section, of a pipe connecting piece according to the invention,

Figure 2 is a front view of the pipe connecting piece according to Figure 1, half in section along the line II-II in Figure 1, the wall of the main part of the pipe connecting piece being discontinuous, and

Figure 3 is a section on enlarged scale of a bulge for securing the branch part in the main part.

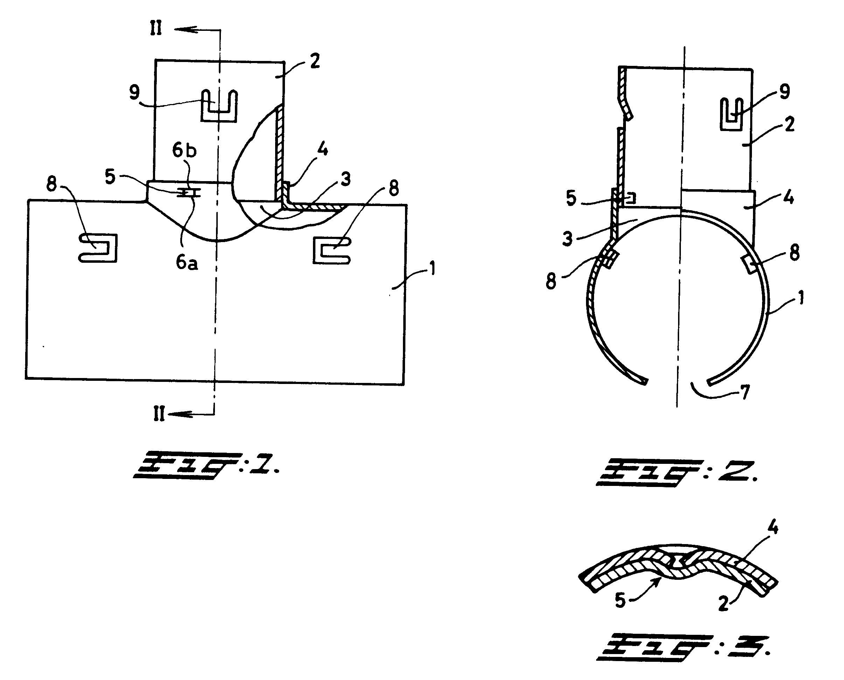

Figures 1 and 2 show a pipe coupling according to the invention which is intended, in particular, for drainage pipes with a wall corrugated in the transverse direction, so-called corrugated pipes. The pipe coupling consists of a main part 1 and a branch part 2 connected thereto. The pipe coupling has essentially the form of a T.

In the wall of the main part 1 an opening 3 is disposed which is bounded at the circumference by a part of the wall of the main part 1 which is bent outwards and which has the form of a collar 4 which fits around the branch part 2. The branch part 2 is inserted into said collar 4 and secured therein by means of a number of inwardly directed bulges 5 disposed in the circumferential wall of the collar 4 and the part of the wall of the branch part 2 inserted therein.

Such a pipe connecting piece may be manufactured very simply from relatively cheap pipe parts and with simple auxiliary tools. The opening 3 in the main part 1 can be made by locally heating the wall of the pipe part which has to form the main part 1 to a temperature at which the material can be deformed and then providing an outward bulge at that position. The end wall of the outward bulge can then be cut away so that the desired opening 3, bounded by the collar 4, is produced.

The bulges 5 can be simply made with a punch having a suitable point. In this process, the wall of the collar is cut through along two parallel short lines 6a and 6b and the wall section situated between said lines is pressed inwards by means of a punch, the wall of the branch part 2 inserted in the collar also being pressed inwards locally. As a result of this, the branch part can no longer be displaced with respect to the main part. Figure 3 shows a section of such a joint on enlarged scale.

In a particular embodiment of the pipe coupling according to the invention, the wall of the main part is discontinuous opposite the branch part 2 over the entire length of the main part as is indicated in Figure 2. As a result of this it is possible to fit the pipe coupling on a continuous pipeline. For this purpose, the wall parts of the main part 1 situated next to the continuous slit 7 are bent outwards, after which the pipe coupling is fitted on the continuous pipeline. The main part 1 can readily deform since the pipe coupling does not have any thickened wall parts. In addition, the main part 1 is still somewhat movable at the position of the collar 4 with respect to the branch part 2.

In order to secure drainage pipe ends inserted in the pipe coupling, both the main part 1 and the branch part 2 of the pipe coupling are provided with locking lugs 8, 9 which project obliquely inwards from the wall. When the pipe ends are inserted, said lugs spring outwards and then drop inwards between the transverse corrugations of the wall of the pipe ends so that the pipe ends can no longer be pulled out of the pipe coupling. If the pipe coupling is placed on a continuous drainage pipe, the lugs 8 serve essentially to position the pipe connecting piece on the continuous drainage pipe.

The pipe coupling according to the invention satisfies all the requirements which are imposed on such pipe coupling. The pipe coupling is easy to manufacture without expensive tools being necessary therefor and without use having to be made of glued points which are disadvantageous. In addition, a branch can very easily be fitted on a drainage pipeline with a pipe coupling according to the invention.

## Claims

1. Plastic pipe coupling, in particular for drainage pipes, consisting of a main part (1) and at least one branch part (2) connected thereto so that the pipe coupling is essentially T-shaped, the main part (1) being provided with an opening (3), disposed in the wall and bounded at the circumference by a collar (4) formed integrally with the main part as an outwardly extending part of the wall thereof, and the branch part being connected to the collar, characterized in that the collar (4) has a cylindrical inner surface over essentially its entire height and the branch part (2) has an end portion with a cylindrical outer surface, which is fittingly received inside the collar and secured therein by means of a number of inwardly directed bulges (5) disposed in the circumferential wall of the collar (4) and the wall portion of the branch part (2) received therein.

**Revendications**

1. Raccord en matière plastique pour tuyaux, notamment Pour des tuyaux d'écoulement, composé d'une partie principale (1) et d'au moins une partie de branchement (2) reliée a la première de telle sorte que le raccord Pour tuyaux. ait sensiblement la forme d'un T, la partie principale (1) étant pourvue d'un orifice (3) ménagé dans la paroi et délimité, sur sa circonférence, par un manchon double (4) réalisé d'une seule pièce avec la partie principale, sous la forme d'une partie s'étendant vers l'extérieur de la paroi de celle-ci, et la partie d'embranchement étant reliée audit manchon double, caractérisé en ce que le manchon double (4) possède, pratiquement sur toute sa hauteur, une surface intérieure cylindrique, et en ce que la partie d'embranchement (2) possède une partie d'extrémité a surface extérieure cylindrique qui est logée de façon ajustée à l'intérieur du manchon double et assujettie dans celui-ci à l'aide d'un certain nombre de renflements (5) dirigés vers l'intérieur et prévus dans la paroi de la circonférence du manchon double (4) et dans la portion de paroi de la partie d'embranchement (2) logée dans le manchon.

**Patentansprüche**

1. Kunststoffrohrkupplung, insbesondere für Drainagerohre, bestehend aus einem Hauptteil (1) und zumindest einem mit diesem verbundenen Abzweigteil (2), derart, daß die Rohrkupplung im wesentlichen T-förmig ist, wobei der Hauptteil (1) mit einer Öffnung (3) versehen ist, die in der Wand angeordnet und am Umfang von einem einstückig mit dem Hauptteil als ein sich nach außen erstreckender Teil seiner Wand gebildeten Bund (4) begrenzt ist, und der Abzweigteil mit dem Bund verbunden ist, dadurch gekennzeichnet, daß der Bund (4) eine zylindrische innere Oberfläche auf im wesentlichen seiner gesamten Höhe besitzt und der Abzweigteil (2) einen Endbereich mit einer zylindrischen äußeren Oberfläche aufweist, die paßgerecht im Inneren des Bundes aufgenommen und in diesem mittels einer Anzahl nach inneren gerichteter Auswölbungen (5) festgelegt ist, die in der Umfangswand des Bundes (4) und dem in diesem aufgenommenen Wandbereich des Abzweigteils (2) angeordnet sind.

Fig. 1.

Fig. 2.

Fig. 3.

4